# EUROPEAN PATENT SPECIFICATION

(11) **EP 4 687 185 B1**
(45) Date of publication and mention of the grant of the patent: **28.10.2026**
(21) Application number: 24191869.7
(22) Date of filing: 30.07.2024
(51) Int. Cl.: H01M 8/04537, H01M 8/04858, H01M 8/249

(54) **METHOD FOR CONTROLLING A HYDROGEN POWER GENERATOR, A CONTROL UNIT AND A HYDROGEN POWER GENERATOR**
VERFAHREN ZUR STEUERUNG EINES WASSERSTOFFSTROMGENERATORS, STEUEREINHEIT UND WASSERSTOFFSTROMGENERATOR
PROCÉDÉ DE COMMANDE D'UN GÉNÉRATEUR D'ÉNERGIE À HYDROGÈNE, UNITÉ DE COMMANDE ET GÉNÉRATEUR D'ÉNERGIE À HYDROGÈNE

(43) Date of publication of application: 04.02.2026
(73) Proprietor: Hitachi Energy Ltd, 8050 Zürich (CH)
(72) Inventor: Maibach, Philippe, 5037 Muhen (CH); Sao, Charles, Morrisville, North Carolina 27560 (US); Testori, Marcello, 20097 San Donato Milanese (IT)
(74) Representative: AWA Sweden AB

(56) References cited:
- EP-B1- 3 346 535
- CN-A- 117 913 326
- CN-B- 108 987 770
- DE-A1- 102018 218 086
- US-A1- 2001 049 038
- US-A1- 2002 177 015
- US-A1- 2009 305 087
- US-A1- 2019 312 432
- US-A1- 2022 059 855
- US-A1- 2023 307 675

## Description

### Technical field

The present disclosure relates to a method for controlling a hydrogen power generator connected to one or more loads. The present disclosure further relates to a control unit performing said method and a hydrogen power generator.

### Background

In order to limit the impact and the negative effects of climate change, a reduction of emission of CO₂ and other gases which contribute to global warming is needed. One way to balance the energy system is by using hydrogen, which is an energy carrier. Hydrogen may be produced by electrolysis, which splits water into oxygen and hydrogen using electricity during periods with an excess of renewable power, such as wind or solar, and the electricity prices are low. When there is a deficit of power, the hydrogen may be used in a fuel cell to produce power.

A fuel cell is most efficient under specific operating conditions, which can be studied through efficiency curves. These curves illustrate the relationship between efficiency and variables such as power output or current density. By examining efficiency curves, it may be determined what the optimal conditions are.

Operating a fuel cell in its most efficient region is beneficial because it maximizes the conversion of fuel into usable electrical energy, thereby reducing fuel consumption and operating costs. Higher efficiency also means lower production of waste heat, which can simplify thermal management and improve system reliability and longevity.

Usually, multiple fuel cells are installed to meet varying power demands, requiring the load on each fuel cell or the number of active fuel cells to be adjusted accordingly. US 2023/0307675 A1 discloses a control apparatus for a multi-module fuel cell generation system that compensates reduced power. DE 10 2018 218 086 A1 discloses a method for operating a fuel cell system with multiple selectively activatable fuel cell stacks.

Current methods for producing power from fuel cells often lead to excessive and uneven wear, causing the fuel cells to deteriorate more quickly. This accelerated wear shortens the lifespan of the cells and increases maintenance costs. Therefore, innovative methods for operating fuel cells are necessary to ensure more uniform wear and longer service life, enhancing overall efficiency and reliability.

### Summary

It is therefore an object of the present disclosure to provide a method for controlling a hydrogen power generator connected to one or more loads that alleviates at least part of the above-mentioned drawbacks. It is for example an object of the present disclosure to provide a method for controlling a hydrogen power generator which results in more even wear of the fuel cells, thereby prolonging the service life of the fuel cells. A further object of the present disclosure is to provide a method that enhances the efficiency of the hydrogen power generator. Further objects of the present disclosure are to provide a control unit and a hydrogen power generator.

According to a first aspect of the present disclosure, a method for controlling a hydrogen power generator connected to one or more loads is provided. The hydrogen power generator comprises a common bus, a plurality of fuel cell branches and at least one power electronic converter for each fuel cell branch connecting the fuel cell branches to the common bus. The method comprises determining a minimum number of fuel cell branches required to meet a request of a total active power generation from said one or more loads, selecting the fuel cell branches to use based on a fuel cell age of each fuel cell branch and the determined minimum number, and generating active power from each of the selected fuel cell branches based on a calculated individual active power request for each fuel cell branch.

According to a second aspect of the present disclosure, a control unit for a hydrogen power generator connected to one or more loads is provided. The hydrogen power generator comprises a common bus, a plurality of fuel cell branches and at least one power electronic converter for each fuel cell branch connecting the fuel cell branches to the common bus. The control unit is configured to determine a minimum number of fuel cell branches required to meet a request of a total active power generation from said one or more loads, select the fuel cell branches to use based on a fuel cell age of each fuel cell branch and the determined minimum number, and generate active power from each of the selected fuel cell branches based on a calculated individual active power request for each selected fuel cell branch.

According to a third aspect of the present disclosure, a hydrogen power generator connected to one or more loads is provided. The hydrogen power generator comprises a plurality of fuel cell branches, a common bus, at least one power electronic converter for each fuel cell branch connecting the fuel cell branches to the common bus, and a control unit according to the second aspect.

The efficiency of fuel cells varies significantly over the operating range of the fuel cell. Moreover, it cannot be guaranteed that the efficiency curve of a fuel cell in a hydrogen power generator is identical to that of another fuel cell in the same hydrogen power generator throughout its operating lifetime. Thus, having the fuel cells share the hydrogen power generator load equally may not result in the most energy efficient operation of the hydrogen power generator. Further, the required power from the hydrogen power generator may vary and all of the fuel cells may not be required to operate at the same time. In the present disclosure, as which of the fuel cell branches that are operated is based on the minimum number of fuel cell branches to meet the request of the total active power generation and on the fuel cell age, the aging of the fuel cell branches may be controlled and evened out.

Fuel cell aging refers to the gradual decline in performance and efficiency of a fuel cell over time, for example due to the degradation of its components. This process is influenced by various factors such as the operating conditions, material properties, and the quality of the fuel. In other words, by selecting which fuel cell branches to operate based on the fuel cell age, the fuel cell branches with the respective highest efficiency and lowest age can be used, allowing the fuel cell branches with higher age to rest, i.e., left out of operation until they are needed. This will even out the load on the fuel cell branches and ensure that some of the fuel cell branches are not worn out too quickly. By evening out the load on the fuel cell branches the maintenance intervals may be reduced and the lifetime of the fuel cell will be prolonged as the wear is more evenly spread out. The fuel cell lifetime depends on the applied load profile.

In the method of the present disclosure, a request of the total active power generation from the control unit, and based on this request the method determines a minimum number of fuel cell branches required to meet said request. The one or more loads may be a microgrid or a power grid in which the loads are located. In such case, it will be a request from the power grid to balance the deficit of power in the power grid that is sent to the hydrogen power generator and the control unit. When the minimum number of fuel cell branches is known, the control unit will determine which fuel cell branches have the lowest age, and use these. For example, if the minimum number of fuel cell branches is five, the five fuel cell branches with the lowest age will be used. Each of the selected fuel cell branches will be provided with the calculated individual active power request to achieve the highest possible efficiency.

The selected number of fuel cell branches is at least as many as the determined minimum number of fuel cell branches. The selected number of fuel cell branches may be higher than the minimum number of fuel cell branches if that is required to operate the fuel cell branches with an improved efficiency ratio.

Each fuel cell branch comprises a fuel cell system and at least one power electronic converter. The fuel cell system may also be referred to as a fuel cell module. Each fuel cell system may comprise at least a fuel cell stack, all the mechanical means to feed hydrogen and compressed air/oxygen to the fuel cell stack, and the means for removing excess gases. The fuel cell system may further comprise a dedicated controller. The fuel cell stack may have a plurality of fuel cells connected in series.

The fuel cell age refers to the technical age determined by measuring performance parameters of the fuel cell system and comparing these measured performance parameters to aging information from fuel cell suppliers. This may for example be measured by the dedicated controller of the fuel cell system, by implementing an age counter in the dedicated controller.

The fuel cell age may be determined by any known methods, such as electrochemical impedance spectroscopy, polarization curve analysis, cyclic voltammetry, performance testing, or thermal imaging. The fuel cell age may be determined through the efficiency of the fuel cell branch, for example through monitoring of a rise in the cell temperature, monitoring power losses of the fuel cell system, or by monitoring the voltage/current curve of the fuel cell system.

The fuel cell branches are connected through the at least one power electronic converter to a common bus that is connected to the one or more load, or the power grid. The common bus distributes the power produced by the fuel cell branches to the one or more loads.

The at least one power electronic converter may be a DC/DC converter or a DC/AC converter, or a combination of both a DC/DC converter and a DC/AC converter.

The method may further comprise increasing the determined minimum number of fuel cell branches such that, in case the selected fuel cell branch with the highest power production has a failure, the request of the total active power generation is still met, thereby obtaining a first updated number of selected fuel cell branches, and generating active power from each of the first updated number of selected fuel cell branches based on a calculated individual active power request for each fuel cell branch.

The determined number of fuel cell branches may be increased until a single fuel cell branch failure ride through is possible. This means that even if the fuel cell branch providing the highest amount of power production has a failure, the remaining selected fuel cell branches should be able to produce the request of the total active power generation from the one or more loads. If the selected minimum number of fuel cell branches is not sufficient to ride through a single fuel cell branch failure, then the number of fuel cell branches will be increased, obtaining a first updated number of selected fuel cell branches. This may be performed by for example performing calculations and adding one fuel cell branch at a time until the ride through requirement can be fulfilled. As a simplified example, if the request of the total active power from the one or more loads is 10 kW, the four fuel cell branches with the lowest age are able to produce, 4 kW, 3 kW, 2 kW and 2 kW than the method would check if the request of the total active power could be produced if the fuel cell branch with highest possible production (4 kW) had a failure. This would not be possible in this example, and therefore the selected number of fuel cells needs to be updated/increased by one and the first updated number of selected fuel cells branches would be five.

Single fuel cell branch failure ride through is a type of criterion that could be compared to the N+1 criterion. The N+1 criterion in power grids is a reliability standard ensuring that the electrical system can withstand the failure of any single component without causing widespread outages. In other words, by using the first updated number of fuel cell branches, it can be ensured that the hydrogen power generator is able to keep providing the required active power, even when one of the fuel cell branches has a failure. This ensures resilience for the hydrogen power generator and minimizes the risk of cascading faults.

The at least one power electronic converter may be at least one inverter. The method may further comprise determining a reactive power request for each inverter of the selected fuel cell branches based on the active power request calculated for the fuel cell branch corresponding to that inverter.

If the first updated number of selected fuel cell branches is provided, the reactive power request will be calculated for each inverter of the first updated number of selected fuel cell branches, i.e., the latest determined number of selected fuel cell branches.

The inverters may be used to balance the reactive power of the one or more loads, by for example providing reactive power. This allows the hydrogen power generator to act as a balance source of both the active power and the reactive power.

The selected fuel cell branch with the highest active power request may have the lowest reactive power request, thereby balancing the load on each inverter. The reactive power request for each inverter may be set in such a way that the inverters of the selected fuel cell branches are as evenly loaded as possible. The inverter of the fuel cell branch with the highest active power request is given the lowest reactive power request and vice-versa.

The method may further comprise further increasing the number of fuel cell branches based on a fuel cell age of the fuel cell branches for determining an updated number of fuel cell branches with which a highest overall efficiency of the selected fuel cell branches is achieved.

This step may either be performed directly after the selection of the fuel cell branches to use or after obtaining the first updated number of selected fuel cell branches. In the latter case, a second updated number of fuel cell branches is provided. The number of selected fuel cell branches is increased until the highest efficiency is achieved. In other words, if the selected number of fuel cell branches is five, this step will increase the number until a decline of the efficiency is seen. The efficiency curve of a fuel cell increases until a current where the efficiency will start declining. As an example, the highest efficiency of the fuel cell may be achieved when the operating current is between 80 A and 150 A, while below 80 A and over 150 A the fuel cell efficiency may be lower. By attempting/testing to increase the number of selected fuel cell branches, the number of fuel cell branches with the highest efficiency can be determined. For each added fuel cell branch, the operating current for each fuel cell branch is reduced, which may allow the fuel cell branches to operate more efficiently. This ensures that the fuel cell branches operate at an improved current, and in particular at the most optimal current. In other words, there may be two different steps that increase the number of fuel cell branches to be used. The first step increases the number of fuel cell branches until a single fault ride through is possible, providing the first updated number of fuel cell branches. Thereafter, the first updated number of fuel cell branches is increased until the number of fuel cell branches with highest overall efficiency is reached, i.e. the second updated number of fuel cell branches.

Efficiency refers to the efficiency with which hydrogen is converted to power.

The individual active power request for each selected fuel cell branch may be calculated based on an efficiency curve for each fuel cell branch.

The calculated individual active power request may be based on the efficiency curve of the fuel cell, the age, or other parameters affecting the efficiency, such as temperature. When based on the efficiency curve, the operating conditions of each fuel cell is set to those of a high efficiency region of the fuel cell, i.e., in the region where the set current and output power provide the highest efficiency.

The individual active power request may be calculated using any common optimization technique, including but not limited to Lagrange multipliers, genetic algorithm, evolutionary algorithm, hill climbing as well as machine learning based techniques such as reinforced learning.

The hydrogen power generator may further comprise a battery and a battery power electronic converter connecting the battery to the common bus.

During normal operation, the battery and the battery power electronic converter are not used. The battery provides capacity to respond to sudden load changes or electrical faults. Having a battery ready to respond to sudden load changes or electrical faults in a power grid offers the advantage of enhanced grid stability through its rapid response capability. Batteries can provide immediate power support, helping to stabilize voltage and frequency levels. Thus, the use of batteries may prevent cascading failures and blackouts.

The hydrogen power generator may further comprise a transformer. The transformer may be positioned at either side of the common bus, such that the fuel cell branch is connected to the common bus either directly or through a dedicated or common transformer. The topology may be "fuel cell branch - power electronic converter - common bus - transformer", or "fuel cell branch - power electronic converter - transformer - common bus", or "fuel cell branch - power electronic converter - multi-winding transformer - common bus". The transformer allows for scaling the voltage and current to be adapted to the one or more loads or to the power grid. The transformer also allows for galvanic insulation of the hydrogen power generator.

Effects and features of the second aspect and the third aspect may be largely analogous to those described above in connection with the combinations of features described for the first aspect. Embodiments mentioned in relation to the first aspect may be at least largely compatible with the second aspect and the third aspect. It is further noted that the present disclosure relates to all possible combinations of features unless explicitly stated otherwise.

### Brief description of the drawings

The above and other aspects of the present disclosure will now be described in more detail, with reference to the appended figures, wherein:
- Fig. 1: schematically shows an overview of a hydrogen power generator connected to one load.
- Fig. 2: schematically shows an overview of a hydrogen power generator connected to a power grid.
- Fig. 3: schematically shows a method for controlling a hydrogen power generator.
- Fig. 4: shows a flow scheme of a method for controlling a hydrogen power generator.

### Detailed description

The present disclosure is described in the following by way of a number of illustrative examples. It will be appreciated that these examples are provided for illustration and explanation only and are not intended to be limiting on the scope of the disclosure.

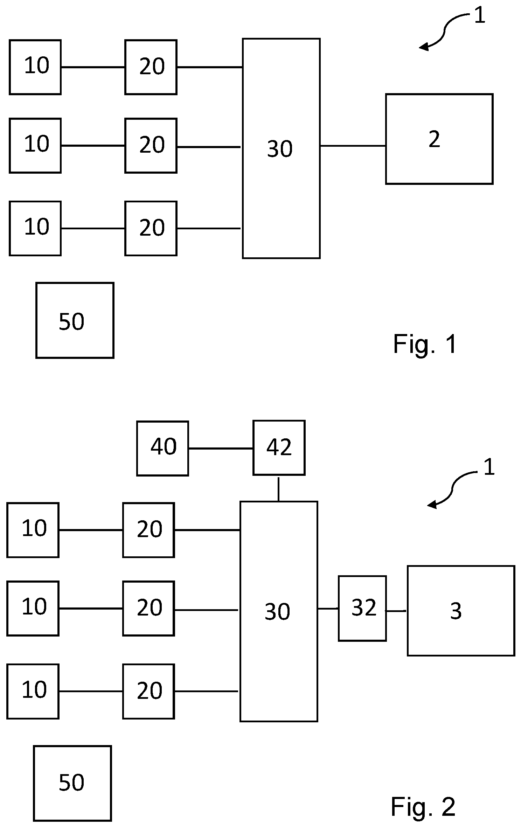

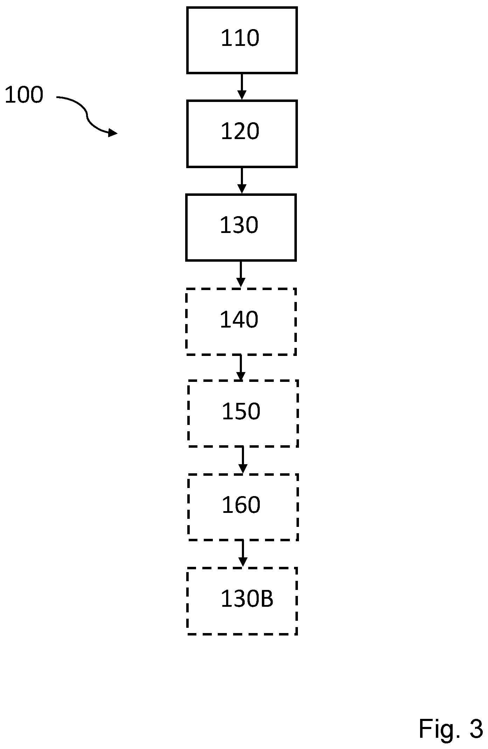

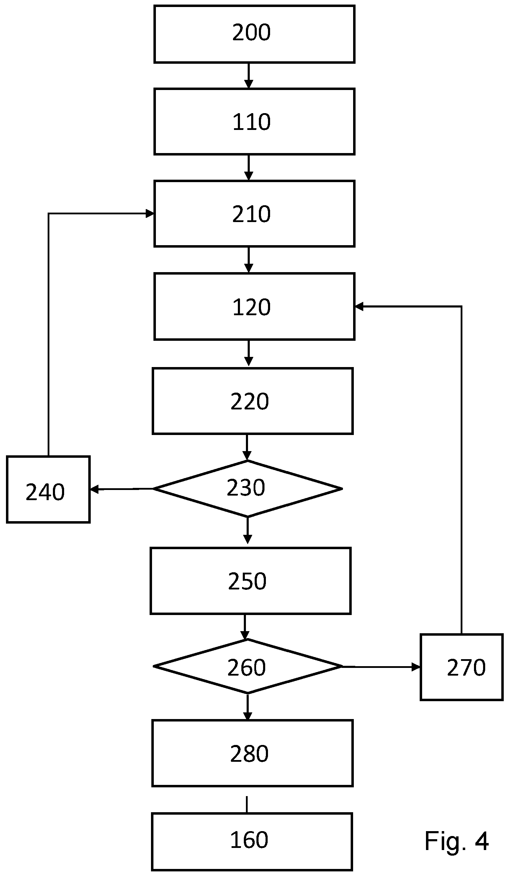

Fig. 1 illustrates an exemplifying embodiment of a hydrogen power generator 1. The hydrogen power generator 1 is connected to one or more loads 2. In Fig. 1, there is only one load 2 illustrated. The hydrogen power generator 1 comprises a common bus 30, a plurality of fuel cell branches 10 and a power electronic converter 20 (such as for example an inverter) for each fuel cell branch 10 connecting each fuel cell branch 10 to the common bus 30. The hydrogen power generator further comprises a control unit 50. The control unit 50 is configured to perform the method 100 that will be further described in connection to Figs. 3 and 4. The common bus 30 distributes the power produced by the fuel cell branches 10 to the load 2. The hydrogen power generator 1 is configured to provide power to the load 2, through the fuel cell branches 10.

Fig. 2 illustrates a second exemplifying embodiment of the hydrogen power generator 1. The hydrogen power generator 1 is connected to a power grid 3, that may comprise a plurality of loads, and also different types of generation plants. The hydrogen power generator 1 in Fig. 2 also comprises a common bus 30, a plurality of fuel cell branches 10 and a power electronic converter 20 for each fuel cell branch 10 connecting each fuel cell branch 10 to the common bus 30 and a control unit 50. However, in Fig. 2, the hydrogen power generator 1 is also provided with a battery 40 and a battery power electronic converter 42 connecting the battery 40 to the common bus 30. The hydrogen power generator 1 is configured to provide power to the power grid 3, through the common bus 30, when there is a deficit. During normal operation, the battery 40 and the battery power electronic converter 42 are not used. The battery 40 provides capacity to respond to sudden load changes or electrical faults, acting as a back-up function.

In Fig. 2, the hydrogen power generator 1 further comprises a transformer 32. The transformer is positioned between the common bus 30 and the power grid 3, such that a "fuel cell branch 10 - power electronic converter 20 - common bus 30 - transformer 32 - power grid 3" topology is provided. However, it should be noted that other topologies may also be used, such as "fuel cell branch - power electronic converter - transformer - common bus - power grid," or "fuel cell branch - power electronic converter - multi-winding transformer - common bus - power grid."

Fig. 3 schematically illustrates the method 100 for controlling a hydrogen power generator 1 connected to one or more loads 2. The method 100 is performed by the control unit 50 of the hydrogen power generator 1 in Figs. 1 or 2.

The method 100 comprises three main steps and four optional steps marked by their dotted boxes. The method includes a first step for determining 110 a minimum number of fuel cell branches 10 required to meet a request of a total active power generation from said one or more loads 2. The method includes a second step for selecting 120 the fuel cell branches 10 to use based on a fuel cell age of each fuel cell branch 10 and the determined minimum number. The method further includes a third step for generating 130 active power from each of the selected fuel cell branches 10 based on a calculated individual active power request for each fuel cell branch 10.

The minimum number of fuel cell branches 10 required refers to the number of fuel cell branches 10 required to meet the total active power generation request from the one or more loads 2, or the power grid 3. The selected number of fuel cell branches 10 is at least as many as the determined minimum number of fuel cell branches 10. The selected number of fuel cell branches 10 may be higher than the minimum number of fuel cell branches 10.

Fuel cell aging refers to the gradual decline in performance and efficiency of a fuel cell over time, primarily due to the degradation of its components. This process is influenced by various factors such as the operating conditions, material properties, and the quality of the fuel. In other words, by selecting which fuel cell branches 10 to operate based on the fuel cell age, the fuel cell branches 10 with the respective highest efficiency and lowest age can be used, allowing the fuel cell branches 10 with higher age to be out of operation until they are needed. This will even out the load on the fuel cell branches 10 and ensure that some of the fuel cell branches 10 are not worn out too quickly.

The fuel cell age refers to the technical age determined by measuring performance parameters and comparing these measured performance parameters to aging information from fuel cell suppliers. The fuel cell age may be determined by any known methods, such as electrochemical impedance spectroscopy, polarization curve analysis, cyclic voltammetry, performance testing, or thermal imaging.

Each fuel cell branch 10 may comprise more than one fuel cell (not shown). In this case, an average fuel cell age for the full fuel cell branch 10 may be calculated.

The individual active power request may be calculated using any common optimization technique, including but not limited to Lagrange multipliers, genetic algorithm, evolutionary algorithm, hill climbing as well as machine learning based techniques such as reinforced learning.

The individual active power request for each selected fuel cell branch 10 may be calculated based on an efficiency curve for each fuel cell branch 10. Other parameters such as for example temperature may also be used when calculating the individual active power request.

The efficiency curve of a fuel cell typically increases until a current level where the efficiency will start declining, providing a concave down curve. As an example the highest efficiency of the fuel cell may be achieved when the operating current is between 80 A and 150 A, while below 80 A and over 150 A the fuel cell efficiency will be lower. Efficiency refers to the efficiency with which hydrogen is converted to electrical power.

In the method 100, the request of the total active power generation from the one or more loads 2 is provided, and based on this request, the method 100 determines a minimum number of fuel cell branches 10 required to meet said request. When the minimum number of fuel cell branches 10 required is known, the control unit 50 will determine which fuel cell branches 10 have the lowest age, and use these. For example, if the minimum number of fuel cell branches 10 is five, the five fuel cell branches 10 with the lowest age will be used. Each of the selected fuel cell branches 10 will be provided with a calculated individual active power request of how much active power the respective fuel cell branch 10 should produce.

The method 100 may be improved by adding additional steps. The method 100 may further comprise increasing 140 the determined number of fuel cell branches 10 such that, in case the selected fuel cell branch 10 with the highest power production has a failure, the request of the total active power generation is still met, thereby obtaining a first updated number of selected fuel cell branches 10. Accordingly, even if the fuel cell branch 10 providing the highest amount of power production has a failure, the remaining selected fuel cell branches 10 should be able to produce the request of the total active power generation from the one or more loads 2.

In other words, if the selected minimum number of fuel cell branches 10 are not able to ride through a single fuel cell branch failure, then the number of fuel cell branches 10 will be increased, thereby obtaining a first updated number of selected fuel cell branches 10. This may be performed by for example performing calculations and adding one fuel cell branch 10 at a time until the ride through requirement can be fulfilled. As a simplified example, if the minimum number of fuel cell branches 10 required to produce the request of the total active power from the one or more loads 2 is one, then the method 100 would check if the request of the total active power could be produced if that fuel cell branch 10 had a failure. This would not be possible, and therefore the selected number of fuel cells needs to be updated by one and the first updated number of selected fuel cells branches 10 would be two.

Another optional step of the method 100 is to further increase 150 the number of fuel cell branches 10 based on a fuel cell age of the fuel cell branches 10 for determining an updated number of fuel cell branches 10 with which a highest overall efficiency of the selected fuel cell branches 10 is achieved. If the step of increasing 140 the number of fuel cell branches 10 to the first updated number of fuel cell branches 10 is present, then the step of further increasing 150 the number of fuel cell branches 10 will be performed on the first updated number of fuel cell branches 10 for determining a second updated number of fuel cell branches 10. This step could also be performed directly after selecting 120 a number of fuel cell branches 10. To further increase 150 the number of fuel cell branches 10 is not dependent on the step of increasing 140 the number of fuel cell branches 10. The number of selected fuel cell branches 10 is increased until the highest efficiency is achieved. In other words, if the selected number of fuel cell branches is five, this step will increase the number until a decline of the efficiency is seen.

By attempting or testing to increase the number of selected fuel cell branches 10, the number of fuel cell branches with the highest efficiency can be determined. For each added fuel cell branch 10, the operating current for each fuel cell branch 10 is reduced, which may allow the fuel cell branches 10 to operate more efficiently. This ensures that the fuel cell branches 10 operate at the most optimal current.

In the case the power electronic converter 20 is an inverter, the method 100 may further comprise determining 160 a reactive power request for each inverter 20 of the selected fuel cell branches 10 based on the active power request calculated for the fuel cell branch 10 corresponding to that inverter 20.

If the first updated number of selected fuel cell branches 10 is provided, the reactive power request will be calculated for each inverter 20 of the first updated number of selected fuel cell branches 10 and if the second updated number of selected fuel cell branches 10 is provided, the reactive power request will be calculated for each inverter 20 of the second updated number of selected fuel cell branches 10, i.e., the latest determined number of selected fuel cell branches 10 will be used when calculating the reactive power request of the inverters 20.

The selected fuel cell branch 10 with the highest active power request may have the lowest reactive power request, thereby balancing the load on each inverter 20. The reactive power request for each inverter 20 may be set in such a way that the inverters 20 of the selected fuel cell branches 10 are as evenly loaded as possible. The inverter 20 of the fuel cell branch 10 with the highest active power request is given the lowest reactive power request and vice-versa.

In cases where the method 100 has an updated number of selected fuel cell branches 10, generating 130B power from the fuel cell branches 10 will be for the most recent updated number of selected fuel cell branches 10, i.e. either the first updated number of selected fuel cell branches 10 or the second updated number of selected fuel cell branches 10.

In Fig. 4 a detailed flow scheme of how the method 100 may be implemented is illustrated. This only illustrates one possible way of implementing the method 100. The first step 200 calculates the total active power request from the one or more loads 2 or receives an input of a power deficit of the power grid 3.

The second step 110 calculates the minimum number of fuel cell branches that is required to produce the total active power request. This is based on the knowledge of the capacity of each fuel cell branch 10. The second step 110 is achieved by sorting all of the fuel cell branches 10 into a list based on their fuel cell age and then adding the number of fuel cell branches 10 required to fulfil the active power request from the one or more loads 2 by adding one fuel cell branch 10 at a time starting from the fuel cell branch 10 with the lowest age.

In the third step 210, the number of fuel cell branches 10 is determined. At start, the number of fuel cell branches 10 is initially set to the minimum number of fuel cell branches required to fulfil the active power request.

The fourth step is provided for selecting 120 the fuel cell branches to use, which is based on the earlier created list based on fuel cell age.

In the fifth step 220, the active power request for each fuel cell branch is calculated. This could be performed through for example minimization of the loss function, also known as the cost function.

The loss function is seen below. $L \left({P}_{SFC 1}^{∗},{P}_{SFC 2}^{∗},…,{P}_{SFCM}^{∗}\right) = {\sum }_{i = 1}^{M} \frac{{P}_{SFCi}^{∗} \left(1-{η}_{i}\left({P}_{SFCi}^{∗}\right)\right)}{{η}_{i} \left({P}_{SFCi}^{∗}\right)}$ $L \left({P}_{SFC 1}^{∗},{P}_{SFC 2}^{∗},…,{P}_{SFCM}^{∗}\right)$ are the total losses of the selected fuel cell branches as a function of their active power references, and *ηᵢ* is the efficiency of the i^{th} fuel cell as a function of its active power reference.

Then, in a sixth step 230, all of the selected fuel cell branches 10 and the associated active power request are studied to ensure that even if the fuel cell branch 10 with the highest associated active power request has a failure, the remaining fuel cell branches 10 are still able to produce the total active power request from the loads 2. If this criterium is not fulfilled, the "minimum" number of fuel cell branches 10 is increased 240 by one, into the first updated number of fuel cell branches 10 and the steps three to five 210, 120, 220 are repeated. This full sequence of step three to six is repeated until the hydrogen power generator can lose the operating fuel cell branch 10 with the highest active power request while still fulfilling the total active power request from the loads 2. When this fault requirement is fulfilled, the method moves to the seventh step 250 at which the overall efficiency is calculated for the fuel cell branches 10 selected in the fourth step.

Step eight 260 ensures that the highest overall efficiency is achieved by first increasing the number of fuel cell branches by one 270 if the number of fuel cell branches is equal to the minimum number of fuel cell branches calculated in 110 or 240, repeating 120, 220 and 250, and then comparing the overall efficiency of the current number of fuel cell branches with the overall efficiency of the previous number of fuel cell branches. As long as the overall efficiency is increased, the first updated number of fuel cell branches 10 will be further increased by one 270 into the second updated number of fuel cell branches 10 and steps four to seven are iterated. When the overall efficiency of the last iteration of the second updated number is below the overall efficiency of the second to last iteration, the method 100 moves to step nine 280, at which the number of fuel cell branches is set to the second to last iteration. There may be more than two iterations before the overall efficiency begins to decrease.

When the number of fuel cell branches 10 is determined, the reactive power request for each fuel cell inverter is calculated in step ten 160.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed.

## Claims

1. A method (100) for controlling a hydrogen power generator (1) connected to one or more loads (2), wherein the hydrogen power generator comprises a common bus (30), a plurality of fuel cell branches (10) and at least one power electronic converter (20) for each fuel cell branch connecting the fuel cell branches to the common bus, the method comprising;
determining (110) a minimum number of fuel cell branches required to meet a request of a total active power generation from said one or more loads,
selecting (120) the fuel cell branches to use based on a fuel cell age of each fuel cell branch and the determined minimum number,
generating (130) active power from each of the selected fuel cell branches based on a calculated individual active power request for each fuel cell branch, **characterized in that** the method (100) further comprises:
increasing (140) the determined minimum number of fuel cell branches such that, in case the selected fuel cell branch with the highest power production has a failure, the request of the total active power generation is still met, thereby obtaining a first updated number of selected fuel cell branches, and
generating (130B) active power from each of the first updated number of selected fuel cell branches based on a calculated individual active power request for each fuel cell branch.

2. The method according to claim 1, wherein the at least one power electronic converter is at least one inverter, and wherein the method further comprising determining (160) a reactive power request for each inverter of the selected fuel cell branches based on the active power request calculated for the fuel cell branch corresponding to that inverter.

3. The method according to claim 2, wherein the selected fuel cell branch with the highest active power request has the lowest reactive power request, thereby balancing the load on each inverter.

4. The method according to any one of the preceding claims, further comprising:
further increasing (150) the selected number of fuel cell branches based on a fuel cell age of the fuel cell branches for determining an updated number of fuel cell branches with which a highest overall efficiency of the selected fuel cell branches is achieved.

5. The method according to any one of the preceding claims, wherein the individual active power request for each selected fuel cell branch is calculated based on an efficiency curve for each fuel cell branch.

6. A control unit (50) for a hydrogen power generator (1) connected to one or more loads (2), wherein the hydrogen power generator comprises a common bus (30), a plurality of fuel cell branches (10) and at least one power electronic converter (20) for each fuel cell branch connecting the fuel cell branches to the common bus, wherein the control unit is configured to;
determine a minimum number of fuel cell branches required to meet a request of a total active power generation from said one or more loads,
select the fuel cell branches to use based on a fuel cell age of each fuel cell branch and the determined minimum number,
generate active power from each of the selected fuel cell branches based on a calculated individual active power request for each selected fuel cell branch, **characterized in that** the control unit is further configured to:
increase the determined minimum number of fuel cell branches such that, in case the selected fuel cell branch with the highest power production has a failure, the request of the total active power generation is still met, thereby obtaining a first updated number of selected fuel cell branches, and
generate active power from each of the first updated number of selected fuel cell branches based on a calculated individual active power request for each fuel cell branch.

7. The control unit according to claim 6, wherein the at least one power electronic converter is at least one inverter and the control unit is further configured to determine a reactive power request for each inverter of the selected fuel cell branches based on the active power request calculated for the fuel cell branch corresponding to that inverter.

8. The control unit according to claim 7, wherein the selected fuel cell branch with the highest active power request has the lowest reactive power request, thereby balancing the load on each inverter.

9. The control unit according to any one of claims 6 to 8, wherein the control unit is further configured to,
further increase the selected number of fuel cell branches based on a fuel cell age of the fuel cell branches for determining an updated number of fuel cell branches with which a highest overall efficiency of the selected fuel cell branches is achieved.

10. The control unit according to any one of claims 6 to 9, wherein the individual active power request for each selected fuel cell branch is calculated based on an efficiency curve for each fuel cell branch.

11. A hydrogen power generator (1) connected to one or more loads (2) comprising;
a plurality of fuel cell branches (10),
a common bus (30),
at least one power electronic converter (20) for each fuel cell branch connecting the fuel cell branches to the common bus, and
a control unit (50) according to any one of claims 6 to 10.

12. The hydrogen power generator according to claim 11, further comprising a battery (40) and a battery power electronic converter (42) connecting the battery to the common bus.

13. The hydrogen power generator according to claim 11 or 12, further comprising a transformer (32).

## Patentansprüche

1. Verfahren (100) zum Steuern eines Wasserstoff-Stromgenerators (1), der mit einer oder mehreren Lasten (2) verbunden ist, wobei der Wasserstoff-Stromgenerator einen gemeinsamen Bus (30), eine Vielzahl von Brennstoffzellenzweigen (10) und mindestens einen Leistungselektronikwandler (20) für jeden Brennstoffzellenzweig, der die Brennstoffzellenzweige mit dem gemeinsamen Bus verbindet, umfasst, wobei das Verfahren Folgendes umfasst:
Bestimmen (110) einer Mindestanzahl von Brennstoffzellenzweigen, die erforderlich sind, um eine Anforderung einer gesamten aktiven Stromerzeugung von der einen oder den mehreren Lasten zu erfüllen,
Auswählen (120) der zu verwendenden Brennstoffzellenzweige basierend auf dem Brennstoffzellenalter jedes Brennstoffzellenzweigs und der bestimmten Mindestanzahl,
Erzeugen (130) von Wirkleistung von jedem der ausgewählten Brennstoffzellenzweige basierend auf einer berechneten individuellen Wirkleistungsanforderung für jeden Brennstoffzellenzweig, **dadurch gekennzeichnet, dass** das Verfahren (100) ferner Folgendes umfasst:
Erhöhen (140) der bestimmten Mindestanzahl von Brennstoffzellenzweigen, so dass, falls der ausgewählte Brennstoffzellenzweig mit der höchsten Stromerzeugung einen Ausfall aufweist, die Anforderung der gesamten aktiven Stromerzeugung immer noch erfüllt ist, wodurch eine erste aktualisierte Anzahl von ausgewählten Brennstoffzellenzweigen erhalten wird, und
Erzeugen (130B) von Wirkleistung aus jedem der ersten aktualisierten Anzahl ausgewählter Brennstoffzellenzweige basierend auf einer berechneten individuellen Wirkleistungsanforderung für jeden Brennstoffzellenzweig.

2. Verfahren nach Anspruch 1, wobei der mindestens eine Leistungselektronikwandler mindestens ein Wechselrichter ist und wobei das Verfahren ferner das Bestimmen (160) einer Blindleistungsanforderung für jeden Wechselrichter der ausgewählten Brennstoffzellenzweige basierend auf der für den Brennstoffzellenzweig, der diesem Wechselrichter entspricht, berechneten Wirkleistungsanforderung umfasst.

3. Verfahren nach Anspruch 2, wobei der ausgewählte Brennstoffzellenzweig mit der höchsten Wirkleistungsanforderung die niedrigste Blindleistungsanforderung aufweist, wodurch die Last an jedem Wechselrichter ausgeglichen wird.

4. Verfahren nach einem der vorhergehenden Ansprüche, das ferner Folgendes umfasst:
weiteres Erhöhen (150) der ausgewählten Anzahl von Brennstoffzellenzweigen basierend auf einem Brennstoffzellenalter der Brennstoffzellenzweige zum Bestimmen einer aktualisierten Anzahl von Brennstoffzellenzweigen, mit denen eine höchste Gesamteffizienz der ausgewählten Brennstoffzellenzweige erreicht wird.

5. Verfahren nach einem der vorhergehenden Ansprüche, wobei die individuelle Wirkleistungsanforderung für jeden ausgewählten Brennstoffzellenzweig basierend auf einer Effizienzkurve für jeden Brennstoffzellenzweig berechnet wird.

6. Steuereinheit (50) für einen Wasserstoff-Stromgenerator (1), der mit einer oder mehreren Lasten (2) verbunden ist, wobei der Wasserstoff-Stromgenerator einen gemeinsamen Bus (30), eine Vielzahl von Brennstoffzellenzweigen (10) und mindestens einen Leistungselektronikwandler (20) für jeden Brennstoffzellenzweig, der die Brennstoffzellenzweige mit dem gemeinsamen Bus verbindet, umfasst, wobei die Steuereinheit für Folgendes ausgelegt ist:
Bestimmen einer Mindestanzahl von Brennstoffzellenzweigen, die erforderlich sind, um eine Anforderung einer gesamten aktiven Stromerzeugung von der einen oder den mehreren Lasten zu erfüllen,
Auswählen der zu verwendenden Brennstoffzellenzweige basierend auf einem Brennstoffzellenalter jedes Brennstoffzellenzweigs und der bestimmten Mindestanzahl, Erzeugen von Wirkleistung von jedem der ausgewählten Brennstoffzellenzweige basierend auf einer berechneten individuellen Wirkleistungsanforderung für jeden ausgewählten Brennstoffzellenzweig, **dadurch gekennzeichnet, dass** die Steuereinheit ferner für Folgendes ausgelegt ist:
Erhöhen der bestimmten Mindestanzahl von Brennstoffzellenzweigen, so dass, falls der ausgewählte Brennstoffzellenzweig mit der höchsten Stromerzeugung einen Ausfall aufweist, die Anforderung der gesamten aktiven Stromerzeugung immer noch erfüllt ist, wodurch eine erste aktualisierte Anzahl von ausgewählten Brennstoffzellenzweigen erhalten wird, und
Erzeugen von Wirkleistung aus jeder der ersten aktualisierten Anzahl ausgewählter Brennstoffzellenzweige basierend auf einer berechneten individuellen Wirkleistungsanforderung für jeden Brennstoffzellenzweig.

7. Steuereinheit nach Anspruch 6, wobei der mindestens eine Leistungselektronikwandler mindestens ein Wechselrichter ist und die Steuereinheit ferner dazu ausgelegt ist, eine Blindleistungsanforderung für jeden Wechselrichter der ausgewählten Brennstoffzellenzweige basierend auf der für den Brennstoffzellenzweig, der diesem Wechselrichter entspricht, berechneten Wirkleistungsanforderung zu bestimmen.

8. Steuereinheit nach Anspruch 7, wobei der ausgewählte Brennstoffzellenzweig mit der höchsten Wirkleistungsanforderung die niedrigste Blindleistungsanforderung aufweist, wodurch die Last an jedem Wechselrichter ausgeglichen wird.

9. Steuereinheit nach einem der Ansprüche 6 bis 8, wobei die Steuereinheit ferner für Folgendes ausgelegt ist:
weitere Erhöhung der ausgewählten Anzahl von Brennstoffzellenzweigen auf der Grundlage des Alters der Brennstoffzellenzweige, um eine aktualisierte Anzahl von Brennstoffzellenzweigen zu bestimmen, mit der ein höchster Gesamtwirkungsgrad der ausgewählten Brennstoffzellenzweige erreicht wird.

10. Steuereinheit nach einem der Ansprüche 6 bis 9, wobei die individuelle Wirkleistungsanforderung für jeden ausgewählten Brennstoffzellenzweig basierend auf einer Wirkungsgradkurve für jeden Brennstoffzellenzweig berechnet wird.

11. Wasserstoff-Stromgenerator (1), der mit einer oder mehreren Lasten (2) verbunden ist und Folgendes umfasst:
eine Vielzahl von Brennstoffzellenzweigen (10),
einen gemeinsamen Bus (30),
mindestens einen Leistungselektronikwandler (20) für jeden Brennstoffzellenzweig, der die Brennstoffzellenzweige mit dem gemeinsamen Bus verbindet, und
eine Steuereinheit (50) nach einem der Ansprüche 6 bis 10.

12. Wasserstoff-Stromgenerator nach Anspruch 11, der ferner eine Batterie (40) und einen Batterie-Leistungselektronikwandler (42) umfasst, der die Batterie mit dem gemeinsamen Bus verbindet.

13. Wasserstoff-Stromgenerator nach Anspruch 11 oder 12, der ferner einen Transformator (32) umfasst.

## Revendications

1. Procédé (100) de commande d'un générateur (1) d'électricité à hydrogène connecté à une ou plusieurs charges (2), le générateur d'électricité à hydrogène comprenant un bus commun (30), une pluralité de branches (10) de piles à combustible et au moins un convertisseur électronique (20) de puissance pour chaque branche de piles à combustible reliant les branches de piles à combustible au bus commun, le procédé comprenant :
la détermination (110) d'un nombre minimum de branches de piles à combustible nécessaires pour satisfaire une demande de génération de puissance active totale émanant de ladite ou desdites charges,
la sélection (120) des branches de piles à combustible à utiliser en fonction d'un âge de piles à combustible de chaque branche de piles à combustible et du nombre minimum déterminé,
la génération (130) d'une puissance active à partir de chacune des branches de piles à combustible sélectionnées sur la base d'une demande de puissance active individuelle calculée pour chaque branche de piles à combustible, **caractérisée en ce que** le procédé (100) comprend en outre :
l'augmentation (140) du nombre minimum déterminé de branches de piles à combustible de telle sorte que, dans le cas où la branche de piles à combustible sélectionnée présentant la production d'électricité la plus élevée présenterait une défaillance, la demande de génération de puissance active totale soit encore satisfaite, ce qui permet d'obtenir un premier nombre actualisé de branches de piles à combustible sélectionnées, et
la génération (130B) d'une puissance active à partir de chaque branche du premier nombre actualisé de branches de piles à combustible sélectionnées, en fonction d'une demande de puissance active individuelle calculée pour chaque branche de piles à combustible.

2. Procédé selon la revendication 1, le ou les convertisseurs électroniques de puissance étant au moins un onduleur, et le procédé comprenant en outre la détermination (160) d'une demande de puissance réactive pour chaque onduleur des branches de piles à combustible sélectionnées sur la base de la demande de puissance active calculée pour la branche de piles à combustible correspondant à l'onduleur en question.

3. Procédé selon la revendication 2, la branche de piles à combustible sélectionnée qui présente la demande de puissance active la plus élevée ayant la demande de puissance réactive la plus faible, équilibrant ainsi la charge sur chaque onduleur.

4. Procédé selon l'une quelconque des revendications précédentes, comprenant en outre :
une augmentation supplémentaire (150) du nombre sélectionné de branches de piles à combustible en fonction d'un âge de piles à combustible des branches de piles à combustible pour déterminer un nombre actualisé de branches de piles à combustible avec lesquelles un rendement global le plus élevé des branches de piles à combustible sélectionnées est obtenu.

5. Procédé selon l'une quelconque des revendications précédentes, la demande de puissance active individuelle pour chaque branche de piles à combustible sélectionnée étant calculée sur la base d'une courbe de rendement pour chaque branche de piles à combustible.

6. Unité (50) de commande pour un générateur (1) d'électricité à hydrogène connecté à une ou plusieurs charges (2), le générateur d'électricité à hydrogène comprenant un bus commun (30), une pluralité de branches (10) de piles à combustible et au moins un convertisseur électronique (20) de puissance pour chaque branche de piles à combustible reliant les branches de piles à combustible au bus commun, l'unité de commande étant configurée pour :
déterminer un nombre minimum de branches de piles à combustible nécessaires pour satisfaire une demande de génération de puissance active totale émanant de ladite ou desdites charges,
sélectionner les branches de piles à combustible à utiliser en fonction d'un âge de piles à combustible de chaque branche de piles à combustible et du nombre minimum déterminé,
générer une puissance active à partir de chacune des branches de piles à combustible sélectionnées sur la base d'une demande de puissance active individuelle calculée pour chaque branche de piles à combustible sélectionnée,
**caractérisée en ce que** l'unité de commande est en outre configurée pour :
augmenter le nombre minimum déterminé de branches de piles à combustible de telle sorte que, dans le cas où la branche de piles à combustible sélectionnée présentant la production d'électricité la plus élevée présenterait une défaillance, la demande de génération de puissance active totale soit encore satisfaite, ce qui permet d'obtenir un premier nombre actualisé de branches de piles à combustible sélectionnées, et
générer une puissance active à partir de chaque branche du premier nombre actualisé de branches de piles à combustible sélectionnées, en fonction d'une demande de puissance active individuelle calculée pour chaque branche de piles à combustible.

7. Unité de commande selon la revendication 6, le ou les convertisseurs électroniques de puissance étant au moins un onduleur et l'unité de commande étant en outre configurée pour déterminer une demande de puissance réactive pour chaque onduleur des branches de piles à combustible sélectionnées sur la base de la demande de puissance active calculée pour la branche de piles à combustible correspondant à l'onduleur en question.

8. Unité de commande selon la revendication 7, la branche de piles à combustible sélectionnée qui présente la demande de puissance active la plus élevée ayant la demande de puissance réactive la plus faible, équilibrant ainsi la charge sur chaque onduleur.

9. Unité de commande selon l'une quelconque des revendications 6 à 8, l'unité de commande étant en outre configurée pour
augmenter encore le nombre sélectionné de branches de piles à combustible en fonction d'un âge de piles à combustible des branches de piles à combustible pour déterminer un nombre actualisé de branches de piles à combustible avec lesquelles un rendement global le plus élevé des branches de piles à combustible sélectionnées est obtenu.

10. Unité de commande selon l'une quelconque des revendications 6 à 9, la demande de puissance active individuelle pour chaque branche de piles à combustible sélectionnée étant calculée sur la base d'une courbe de rendement pour chaque branche de piles à combustible.

11. Générateur (1) d'électricité à hydrogène relié à une ou plusieurs charges (2) comprenant :
une pluralité de branches (10) de piles à combustible, un bus commun (30),
au moins un convertisseur électronique (20) de puissance pour chaque branche de piles à combustible reliant les branches de piles à combustible au bus commun, et
une unité (50) de commande selon l'une quelconque des revendications 6 à 10.

12. Générateur d'électricité à hydrogène selon la revendication 11, comprenant en outre une batterie (40) et un convertisseur électronique (42) de puissance de batterie connectant la batterie au bus commun.

13. Générateur d'électricité à hydrogène selon la revendication 11 ou 12, comprenant en outre un transformateur (32).
